# EUROPEAN PATENT APPLICATION

(11) **EP 4 821 639 A1**
(43) Date of publication of application: **14.10.2026**
(21) Application number: 24912901.6
(22) Date of filing: 25.12.2024
(51) Int. Cl.: B25J 5/00

(54) **HUMANOID ROBOT AND PROGRAM**

(30) Priority: 28.12.2023 JP 2023223065
(71) Applicant: SoftBank Group Corp., Tokyo 105-7537 (JP)
(72) Inventor: SON, Masayoshi, Tokyo 105-7537 (JP)
(74) Representative: DREISS Patentanwälte PartG mbB
(86) International application number: PCT/JP2024/045879
(87) International publication number: WO 2025/143015

(57) **Abstract**

A humanoid robot includes an upper body portion having at least one arm portion, a leg portion placed on a floor, and a coupling portion that turnably couples the upper body portion to the leg portion, in which a wheel is provided at a lower end of the leg portion.

## Description

### Technical Field

The present disclosure relates to a humanoid robot and a program.

### Background Art

In a production line of a factory, a humanoid robot for automatically performing work is used. Patent Literature 1 discloses attitude control of a humanoid robot.

### Citation List

### Patent Literature

Patent Literature 1: Japanese Patent Application Laid-Open (JP-A) No. 2019-093506

### SUMMARY OF INVENTION

### Technical Problem

However, the conventional humanoid robot is unstable to walk bipedally. It is not possible to determine a distance or an angle to a target object. Therefore, in a case in which an object drops from a production line or in a case in which an object that is a work target is placed on a floor or the like, an action of picking up the object cannot be performed. There is a possibility of falling down in a case in which an object on a production line is pushed or pulled.

The disclosure has been made in view of the above circumstances, and an object of the disclosure is to solve the above problems.

### Solution to Problem

A humanoid robot according to the disclosure includes an upper body portion having at least one arm portion, a leg portion placed on a floor, and a coupling portion that turnably couples the upper body portion to the leg portion, in which a wheel is provided at a lower end of the leg portion.

In the humanoid robot according to the disclosure, the coupling portion may be configured to tilt the upper body portion with respect to the leg portion as a turning action.

In the humanoid robot according to the disclosure, the coupling portion may be configured to rotate the upper body portion with respect to the leg portion in a horizontal direction of the floor as a turning action.

In the humanoid robot according to the disclosure, four leg portions may be provided on an outer peripheral side of the coupling portion.

The humanoid robot according to the disclosure may further include an information acquisition unit that acquires information indicating at least a distance and an angle between the arm portion and an object that is a work target of the arm portion, and a control unit that controls at least one of an action of the leg portion, an action of the arm portion, or rotation of the coupling portion on the basis of the information.

A program according to the disclosure causes a computer to function as the control unit of the humanoid robot according to the disclosure.

The above summary of the disclosure does not enumerate all of the necessary features of the disclosure. A subcombination of these feature groups can also be included in the disclosure.

### BRIEF DESCRIPTION OF DRAWINGS

Fig. 1 is a perspective view of a humanoid robot according to the present embodiment.
Fig. 2 is a side view of the humanoid robot according to the present embodiment.
Fig. 3 is a diagram schematically illustrating an example of a functional configuration of the humanoid robot.
Fig. 4 is a diagram schematically illustrating an example of a processing routine executed by an information processing device.
Fig. 5 is a diagram schematically illustrating an example of computer hardware functioning as the information processing device.

### DESCRIPTION OF EMBODIMENTS

Hereinafter, the disclosure will be described through embodiments of the disclosure, but the following embodiments do not limit the disclosure according to the claims. Not all combinations of features described in the embodiments are essential to the solution of the disclosure.

Hereinafter, an example of an embodiment of the disclosure will be described with reference to the drawings. In the drawings, the same or equivalent constituents and portions are denoted by the same reference numerals. Dimensional ratios in the drawings are exaggerated for convenience of description, and may be different from actual ratios.

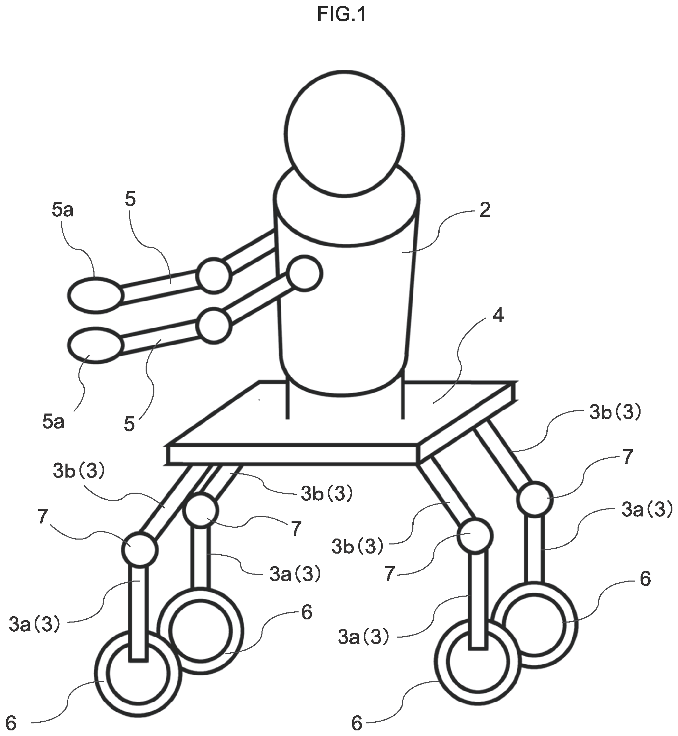

Fig. 1 is a front view of a humanoid robot according to a first embodiment. As illustrated in Fig. 1, a humanoid robot 1 according to the present embodiment includes an upper body portion 2, leg portions 3, and a coupling portion 4 that rotatably connects the upper body portion 2 to the leg portion 3. The humanoid robot 1 is disposed in, for example, a production line of a factory, and performs work on an object or the like on the line or a floor.

The upper body portion 2 has two arm portions 5. The arm portions 5 are turnably attached to the left and right of the upper body portion 2. Grip portions 5a for gripping an object are attached to tips of the arm portions 5. The number of arm portions is not limited to two, and may be one or three or more.

The leg portions 3 are provided to extend from the lower portion side of the coupling portion 4 to the floor side. Wheels 6 are provided at lower ends of the leg portions 3, and the humanoid robot 1 can move on the floor on which the humanoid robot 1 is disposed. The four leg portions 3 are provided on the outer peripheral side of the coupling portion 4. The number of leg portions 3 is not limited to four, and may be any number as long as the humanoid robot 1 can be supported. In order to stabilize the humanoid robot 1, desirably four leg portions 3 are provided.

A knee portion 7 is provided in the middle of each of the leg portions 3, and can change an angle between the leg portion 3a on the wheel 6 side and the leg portion 3b on the coupling portion 4 side under the control of a control unit 142 that will be described later. As a result, it is easy to balance the humanoid robot 1. The height of the humanoid robot 1 can also be changed by changing the angle between the leg portion 3a on the wheel 6 side and the leg portion 3b on the coupling portion 4 side. Specifically, the upper body portion 2 can be lowered by setting such an angle to an acute angle, and the upper body portion 2 can be raised by setting such an angle to an obtuse angle. As a result, the position of the upper body portion 2 in the up-down direction with respect to the leg portion 3 can be adjusted to match the height of a workbench in the production line.

The coupling portion 4 couples the upper body portion 2 and the leg portion 3 to be turnable. Specifically, the coupling portion 4 includes a tilting mechanism using a motor or a cylinder. As the motor and the cylinder, any of an electric system, a hydraulic system, or a pneumatic system can be adopted. Therefore, the upper body portion 2 can be tilted forward and backward with respect to the leg portion 3.

Here, in the case of the tilting mechanism using the motor, the motor fixed to one of the coupling portion 4 or the upper body portion 2 is driven, so that the other of the coupling portion 4 or the upper body portion 2 is tilted. As a result, the upper body portion 2 is tilted relative to the leg portion 3.

In the case of the tilting mechanism using the cylinder, there are a fixed point at which one end of the cylinder is fixed to one of the coupling portion 4 or the upper body portion 2, and an operating point at which the other end of the cylinder is fixed to the other of the coupling portion 4 or the upper body portion 2. By operating the cylinder to change the distance between the fixed point and the operating point, the upper body portion 2 is tilted relative to the leg portion 3.

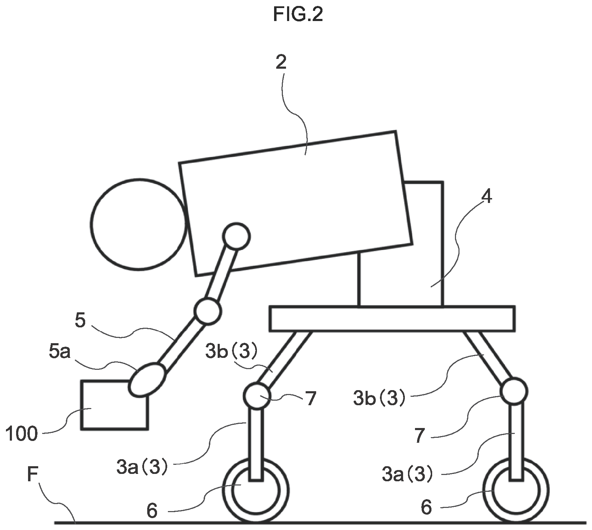

Therefore, as illustrated in Fig. 2, the humanoid robot 1 of the present embodiment can tilt the upper body portion 2 forward with respect to the leg portion 3 to pick up an object 100 placed on a floor F or dropped on the floor F during work.

The leg portion 3 has a balance function for preventing the humanoid robot 1 from falling down in a case in which the upper body portion 2 tilts forward or backward with respect to the leg portion 3 or the humanoid robot 1 moves.

The coupling portion 4 of the present embodiment is configured such that the upper body portion 2 can be rotated in the horizontal direction of the surface of the floor F with respect to the leg portion 3 as a turning action. Specifically, the coupling portion 4 includes a rotation mechanism using a motor or a cylinder. As the motor and the cylinder, any of an electric system, a hydraulic system, or a pneumatic system can be adopted.

Here, in the case of the rotation mechanism using the motor, in a case in which the motor fixed to one of the upper portion or the lower portion of the coupling portion 4 is driven, the other side of the upper portion or the lower portion of the coupling portion 4 is rotated. As a result, the upper body portion 2 is rotated relative to the leg portion 3.

In the case of the rotation mechanism using the cylinder, there are a fixed point at which one end of the cylinder is fixed to one of the upper portion or the lower portion of the coupling portion 4, and an operating point at which the other end of the cylinder is fixed to the other of the upper portion or the lower portion of the coupling portion 4. The upper body portion 2 is rotated relative to the leg portion 3 by operating the cylinder to change a distance between the fixed point and the operating point.

In the case of the rotation mechanism using the cylinder, since there is a restriction on the rotatable angle, in a case in which the upper body portion 2 is rotated many times with respect to the leg portion 3, it is preferable to adopt a crank mechanism or select a rotation mechanism using a motor.

According to the rotation mechanism of the coupling portion 4, the following operation can be performed. For example, by driving the coupling portion 4 to perform a horizontal rotation operation in a state in which the humanoid robot 1 faces the workbench, the humanoid robot 1 of the present embodiment can face a workbench on the opposite side with the workbench and the humanoid robot 1 interposed therebetween.

The horizontal turning action of the coupling portion 4 not only rotates the upper body portion 2 by 180 degrees, but also can rotate the upper body portion 2 in a range of from 0 to 360 degrees and stop the upper body portion 2 at any position.

The rotation angle is, for example, 90 degrees, but is not limited thereto, and may be 180 degrees or 360 degrees, or may be any angle.

Driving of the humanoid robot 1 of the present embodiment is controlled by a control system 10 mounted in the humanoid robot 1.

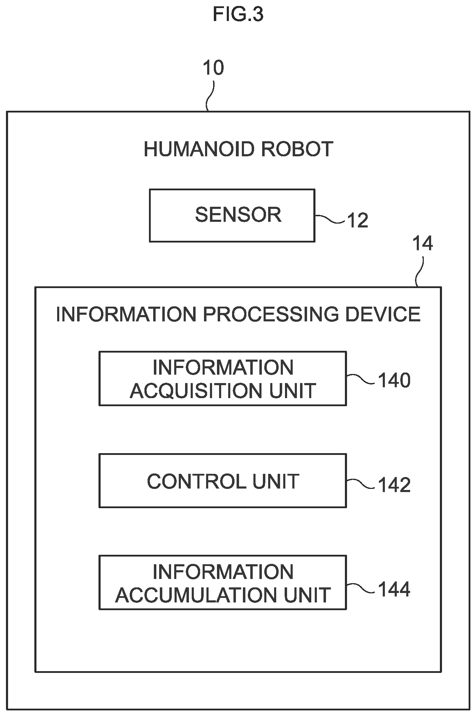

Fig. 3 is a schematic view illustrating an example of the control system of the humanoid robot of the present embodiment. The control system 10 includes a sensor 12 mounted on the humanoid robot and an information processing device 14.

The sensor 12 sequentially acquires information indicating at least a distance and an angle between the object 100 that is located around the humanoid robot 1 and is a work target of the humanoid robot 1 and the arm portions 5. As the sensor 12, a highest-performance camera, a solid-state LiDAR, a multi-color laser coaxial displacement meter, or any of various other sensor groups may be used. Examples of the sensor 12 include a vibratory meter, a thermo camera, a hardness meter, a radar, a LiDAR, a high-pixel/telephoto/ultra-wide angle/360 degrees/high-performance camera, a vision recognition sensor, a microsound sensor, an ultrasonic sensor, a vibration sensor, an infrared sensor, an ultraviolet sensor, an electromagnetic wave sensor, a temperature sensor, a humidity sensor, a spot AI weather forecast sensor, a high-precision multi-channel GPS sensor, a low-altitude satellite information sensor, and a sensor using long tail incident AI data.

In addition to the above information, the sensor 12 detects an image, a distance, vibration, heat, odor, a color, sound, an ultrasonic wave, an ultraviolet ray, an infrared ray, or the like. Examples of the information detected by sensor 12 include movement of the center of gravity of the humanoid robot 1, a material of the floor F on which the humanoid robot 1 is installed, the outside air temperature, the outside air humidity, vertical and lateral oblique inclination angles of the floor F, and a moisture content.

The sensor 12 performs such detection, for example, every nanosecond.

The information processing device 14 includes an information acquisition unit 140, a control unit 142, and an information accumulation unit 144.

The information acquisition unit 140 acquires information regarding the object 100 detected by the sensor 12.

The control unit 142 controls an action of the leg portion 3, a turning action of the coupling portion 4, an action of the arm portion 5, and the like by using the information acquired by the information acquisition unit 140 and artificial intelligence (AI).

For example, the control unit 142 executes the following processes.
(1) In order to move the humanoid robot 1 to the position of the object 100 on the floor F, the driving of the wheels 6 is controlled. Specifically, the control unit 142 controls a rotation direction and a steering angle of each wheel 6 on the basis of the distance to the object 100 detected by the sensor 12.
(2) The coupling portion 4 is driven so that the object 100 on the floor F can be picked up, and the upper body portion 2 is tilted forward or backward.
(3) The arm portion 5 and the grip portion 5a are driven so that the object 100 can be gripped. In this case, the coupling portion 4 is driven as necessary to tilt the upper body portion 2 forward or backward.
(4) In order to prevent the humanoid robot 1 from falling down, balance is taken.
(5) The coupling portion 4 is driven to rotate the upper body portion 2 in the horizontal direction.
(6) Driving of the wheels 6 is controlled such that the humanoid robot 1 can push forward a cart or the like.

The information accumulation unit 144 accumulates information of the object 100 detected by the sensor 12. A log of the action of the humanoid robot 1 controlled by the control unit 142 is accumulated.

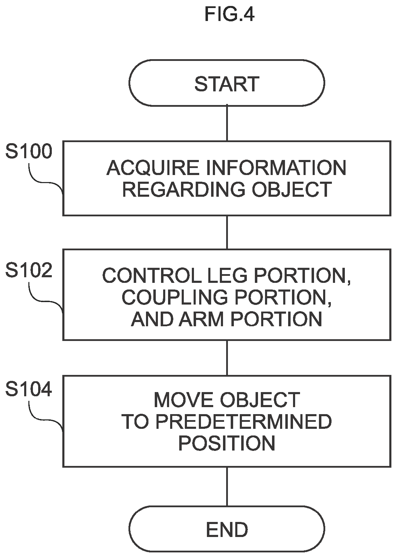

For example, in a case in which the object 100 on the floor F is picked up, the information processing device 14 repeatedly executes the flowchart illustrated in Fig. 4.

In step S100, the information acquisition unit 140 acquires information regarding the object 100 detected by the sensor 12.

In step S102, the control unit 142 picks up the object 100 on the floor F by controlling the leg portions 3, the coupling portion 4, and the arm portions 5 by using the information regarding the object 100 acquired in step S100 and the AI.

In step S104, the control unit 142 moves the picked up object 100 to a predetermined position.

According to the present embodiment, the humanoid robot 1 includes the upper body portion 2, the leg portions 3, and the coupling portion 4 that turnably couples the upper body portion 2 and the leg portions 3. The turning of the coupling portion 4 is controlled on the basis of the information acquired by the sensor 12. Therefore, a distance and an angle between the humanoid robot 1 and the object 100 can be determined, so that an action of picking up the object 100 on the floor F can be performed.

The leg portions 3 have a balance function for preventing the humanoid robot 1 from falling down in a case in which the upper body portion 2 is tilted forward or backward with respect to the leg portions 3. Therefore, it is possible to prevent the humanoid robot 1 from falling down in a case in which the work of pushing or pulling the object 100 on the production line is performed. Therefore, it is possible to prevent a failure of the humanoid robot 1 due to the falling down, an injury of a person around the humanoid robot 1, or the like.

The coupling portion 4 is configured to be turnable in the horizontal direction in addition to the tilting and expansion/contraction actions. Therefore, the humanoid robot 1 can carry the object 100 to a place on the rotation path through the rotation of the coupling portion 4, and can successively perform the work in a plurality of work places on the rotation path.

In the humanoid robot 1 of the present embodiment, the coupling portion 4 may be rotated in a state in which the upper body portion 2 is tilted forward or backward. That is, the object 100 can be swung up or down.

As described above, in a case in which the upper body portion 2 is tilted or rotated by the coupling portion 4, the above-described balance function is operated to prevent the humanoid robot 1 from falling down. For example, the balance function maintains the balance by changing an inclination and a rotation angle of the upper body portion 2. For example, the balance function drives the wheels 6 and maintains the balance with their driving torque.

### [Supplement]

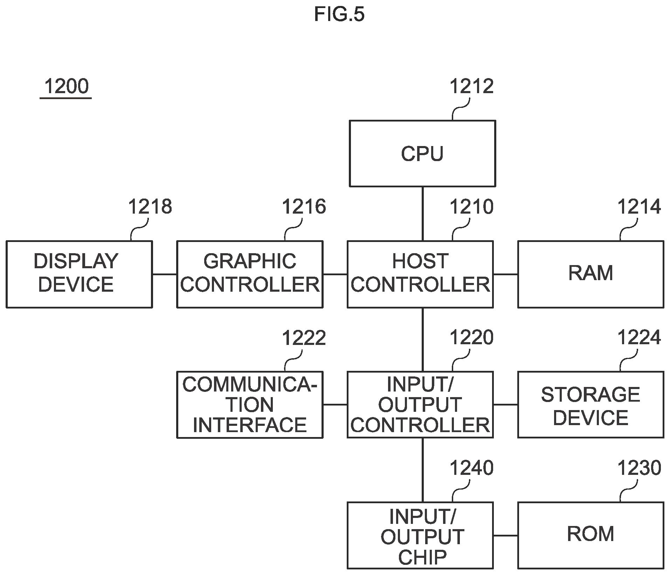

Fig. 5 schematically illustrates an example of a hardware configuration of a computer 1200 that functions as the information processing device 14. A program installed in the computer 1200 can cause the computer 1200 to function as one or more "units" of the device according to the present embodiment, or cause the computer 1200 to execute an operation associated with the device according to the present embodiment or one or more "units" thereof, and/or cause the computer 1200 to execute a process according to the present embodiment or a stage of the process. Such programs may be executed by a CPU 1212 to cause the computer 1200 to execute certain operations associated with some or all of the blocks in the flowcharts and block diagrams described herein.

The computer 1200 according to the present embodiment includes a CPU 1212, a RAM 1214, and a graphic controller 1216, which are connected to each other via a host controller 1210. The computer 1200 also includes input/output units such as a communication interface 1222, a storage device 1224, a DVD drive, and an IC card drive, which are connected to the host controller 1210 via an input/output controller 1220. The DVD drive may be a DVD-ROM drive, a DVD-RAM drive, or the like. The storage device 1224 may be a hard disk drive, a solid state drive, or the like. The computer 1200 also includes a ROM 1230 and an input/output unit such as a keyboard, which are connected to the input/output controller 1220 via an input/output chip 1240.

The CPU 1212 operates according to programs stored in the ROM 1230 and the RAM 1214, thereby controlling each unit. The graphic controller 1216 acquires image data generated by the CPU 1212 in a frame buffer or the like provided in the RAM 1214 or itself, and causes the image data to be displayed on a display device 1218.

The communication interface 1222 communicates with other electronic devices via a network. The storage device 1224 stores programs and data used by the CPU 1212 in the computer 1200. The DVD drive reads a program or data from a DVD-ROM or the like and provides the program or data to the storage device 1224. The IC card drive reads a program and data from the IC card and/or writes the program and data to the IC card.

The ROM 1230 stores therein a boot program or the like executed by the computer 1200 at the time of activation and/or a program depending on hardware of the computer 1200. The input/output chip 1240 may also connect various input/output units to the input/output controller 1220 via a USB port, a parallel port, a serial port, a keyboard port, a mouse port, or the like.

The program is provided by a computer-readable storage medium such as a DVD-ROM or an IC card. The program is read from a computer-readable storage medium, installed in the storage device 1224, the RAM 1214, or the ROM 1230, which is also an example of a computer-readable storage medium, and executed by the CPU 1212. The information processing described in such a program provides cooperation between the program read by the computer 1200 and the various types of hardware resources. A device or a method may be configured by implementing an operation or processing of information according to use of the computer 1200.

For example, in a case in which communication is executed between the computer 1200 and an external device, the CPU 1212 may execute a communication program loaded in the RAM 1214 and instruct the communication interface 1222 to perform communication processing on the basis of processing described in the communication program. Under the control of the CPU 1212, the communication interface 1222 reads transmission data stored in a transmission buffer area provided in a recording medium such as the RAM 1214, the storage device 1224, the DVD-ROM, or the IC card, transmits the read transmission data to the network, or writes reception data received from the network to a reception buffer area or the like provided on the recording medium.

The CPU 1212 may cause the RAM 1214 to read all or a necessary portion of a file or database stored in an external recording medium such as the storage device 1224, the DVD drive (DVD-ROM), or the IC card, and may execute various types of processing on data in the RAM 1214. Next, the CPU 1212 may write back the processed data to the external recording medium.

Various types of information such as various types of programs, data, tables, and databases may be stored in a recording medium and subjected to information processing. The CPU 1212 may execute various types of processing on the data read from the RAM 1214, including various types of operations, information processing, condition determination, conditional branching, unconditional branching, information retrieval/replacement, and the like, which are described throughout the disclosure and specified by a command sequence of a program, and writes back the results to the RAM 1214. The CPU 1212 may search for information in a file, a database, or the like in the recording medium. For example, in a case in which a plurality of entries each having an attribute value of a first attribute associated with an attribute value of a second attribute are stored in the recording medium, the CPU 1212 may search for an entry in which the attribute value of the first attribute matches a specified condition from the plurality of entries, read the attribute value of the second attribute stored in the entry, and thus acquire the attribute value of the second attribute associated with the first attribute satisfying a predetermined condition.

The programs or software modules described above may be stored in the computer 1200 or a computer-readable storage medium near the computer 1200. A recording medium such as a hard disk or a RAM provided in a server system connected to a dedicated communication network or the Internet may be used as a computer-readable storage medium, and provides a program to the computer 1200 via the network.

Blocks in the flowcharts and the block diagrams in the present embodiments may represent stages of a process in which an operation is performed or "units" of a device having a role of performing an operation. Specific stages and "units" may be implemented by a dedicated circuit, a programmable circuit supplied along with computer readable instructions stored on a computer readable storage medium, and/or a processor supplied along with computer readable instructions stored on a computer readable storage medium. Dedicated circuits may include digital and/or analog hardware circuits, and may include integrated circuits (ICs) and/or discrete circuits. Programmable circuits may include reconfigurable hardware circuits including, for example, AND, OR, XOR, NAND, NOR, and other logical operations, flip-flops, registers, and memory elements, such as field programmable gate arrays (FPGA) and programmable logic arrays (PLA).

Computer readable storage media may include any tangible device capable of storing instructions executed by a suitable device, and, as a result, a computer readable storage medium having instructions stored thereon has a product including instructions that may be executed to create means for executing operations designated in the flowcharts or block diagrams. Examples of the computer readable storage medium may include an electronic storage medium, a magnetic storage medium, an optical storage medium, an electromagnetic storage medium, and a semiconductor storage medium. More specific examples of the computer readable storage medium may include a Floppy (registered trademark) disk, a diskette, a hard disk, a random access memory (RAM), a read-only memory (ROM), an erasable programmable read-only memory (an EPROM or a flash memory), an electrically erasable programmable read-only memory (EEPROM), a static random access memory (SRAM), a compact disc read-only memory (CD-ROM), a digital versatile disk (DVD), a Blu-Ray (registered trademark) disk, a memory stick, and an integrated circuit card.

The computer readable instructions may include either source codes or object codes written in any combination of one or more programming languages, including assembler instructions, instruction-set-architecture (ISA) instructions, machine instructions, machine-dependent instructions, microcode, firmware instructions, state-setting data, or an object oriented programming language such as Smalltalk (registered trademark), or JAVA (registered trademark), C++, and conventional procedural programming languages such as the "C" programming language or similar programming languages.

The computer readable instructions may be provided to a processor of a general purpose computer, a special purpose computer, or another programmable data processing device, or a programmable circuit locally or via a local area network (LAN) or a wide area network (WAN) such as the Internet, in order to cause the processor of the general purpose computer, the special purpose computer, or another programmable data processing device or the programmable circuit to execute the computer readable instructions to generate means for executing operations designated in the flowcharts or the block diagrams. Examples of the processor include a computer processor, a processing unit, a microprocessor, a digital signal processor, a controller, and a microcontroller.

Although the technology of the disclosure has been described by using each embodiment, the technology of the disclosure is not limited to the scope disclosed in each embodiment. It is apparent to those skilled in the art that various modifications or improvements can be made to the above embodiments. It is apparent from the description of the claims that modes to which such modifications or improvements are added can also be included in the technical scope of the disclosure.

The order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

Although the technology of the disclosure has been described by using each embodiment, the technology of the disclosure is not limited to the scope disclosed in each embodiment. It is apparent to those skilled in the art that various modifications or improvements can be made to the above embodiments. It is apparent from the description of the claims that modes to which such modifications or improvements are added can also be included in the technical scope of the disclosure.

The order of execution of each piece of processing of operations, procedures, steps, stages, and the like in the devices, the systems, the programs, and the methods shown in the claims, the specification, and the drawings can be realized in any order unless "before", "prior to", or the like is explicitly stated, and unless the output of the previous processing is used in the later processing. Even in a case in which the operation flow in the claims, the specification, and the drawings is described by using "first,", "next,", and the like for convenience, this does not mean that it is essential to perform in this order.

The disclosure of Japanese Patent Application No. 2023-223065 filed on December 28, 2023 is incorporated herein by reference in its entirety.

### REFERENCE SIGNS LIST

- 1: Humanoid robot
- 2: Upper body portion
- 3: Leg portion
- 4: Coupling portion
- 5: Arm portion
- 5a: Grip portion
- 6: Wheel
- 7: Knee portion
- 10: Control system
- 12: Sensor
- 14: Information processing device
- 100: Object
- 1200: Computer
- 1210: Host controller
- 1212: CPU
- 1214: RAM
- 1216: Graphic controller
- 1218: Display device
- 1220: Input/output controller
- 1222: Communication interface
- 1224: Storage device
- 1230: ROM
- 1240: Input/output chip

## Claims

1. A humanoid robot comprising:
an upper body portion having at least one arm portion;
a leg portion placed on a floor; and
a coupling portion that turnably couples the upper body portion to the leg portion, wherein
a wheel is provided at a lower end of the leg portion.

2. The humanoid robot according to claim 1, wherein the coupling portion is configured to be tiltable the upper body portion with respect to the leg portion as a turning action.

3. The humanoid robot according to claim 1, wherein the coupling portion is configured to be able to rotate the upper body portion with respect to the leg portion in a horizontal direction of the floor as a turning action.

4. The humanoid robot according to claim 1, wherein four leg portions are provided on an outer peripheral side of the coupling portion.

5. The humanoid robot according to claim 1, further comprising:
an information acquisition unit that acquires information indicating at least a distance and an angle between the arm portion and an object that is a work target of the arm portion; and
a control unit that controls at least one of an action of the leg portion, an action of the arm portion, or rotation of the coupling portion on the basis of the information.

6. A program for causing a computer to function as the control unit of the humanoid robot according to claim 5.
